# EUROPÄISCHE PATENTSCHRIFT

(11) **EP 3 662 353 B1**
(45) Veröffentlichungstag und Bekanntmachung des Hinweises auf die Patenterteilung: **07.07.2021**
(21) Anmeldenummer: 18765535.2
(22) Anmeldetag: 25.07.2018
(51) Int. Cl.: G06F 3/01, G06F 3/0488, G05B 19/409

(54) **INDUSTRIEBEDIENPANEL**
INDUSTRIAL OPERATING PANEL
PANNEAU DE COMMANDE INDUSTRIEL

(30) Priorität: 31.07.2017 AT 506372017
(43) Veröffentlichungstag der Anmeldung: 10.06.2020
(73) Patentinhaber: KEBA AG, 4041 Linz (AT)
(72) Erfinder: HOCHHOLDINGER, Michael Anton, 4040 Linz (AT)
(74) Vertreter: Burger, Hannes
(86) Internationale Anmeldenummer: PCT/AT2018/060162
(87) Internationale Veröffentlichungsnummer: WO 2019/023726

(56) Entgegenhaltungen:
- WO-A1-2016/144577
- AT-A2- 511 488
- US-A1- 2002 033 795
- US-A1- 2005 141 681
- US-A1- 2014 139 472
- US-A1- 2014 362 014
- US-A1- 2016 034 057
- US-A1- 2016 048 210
- US-A1- 2016 077 654
- US-A1- 2016 139 670
- US-A1- 2016 274 784
- US-A1- 2017 021 496
- US-A1- 2017 024 058

## Beschreibung

Die Erfindung betrifft ein Verfahren zum Betreiben eines Industriebedienpanels einer elektronischen Steuerung zum Bedienen, Überwachen oder Programmieren von industriellen Anlagen oder Maschinen, wie dies im Anspruch 1 angegeben ist.

Stationäre Bedienpaneele, welche steuerungstechnisch in industrielle Anlagen oder Maschinen eingebunden sind, um die jeweiligen Prozess- bzw. Steuerungsabläufe beeinflussen, überwachen oder programmieren zu können, sind aus dem Stand der Technik bekannt. Bedienpaneele neuerer Generation weisen dabei typischerweise einen Touch-Screen auf, bei welchen einem hochauflösenden, grafischen Display ein Touch-Panel bzw. ein sonstiges, vorzugsweise kapazitiv arbeitendes, berührungssensitives Eingabemittel überlagert ist. Solche Bedienpaneele werden zunehmend mit einer Teilkomponente der Gesamtsteuerung, insbesondere mit einer dezentralen Steuerungseinheit baulich kombiniert bzw. zu einer Baueinheit zusammengefasst. Je nach Anwendung bzw. je nach Maschinentype werden diese Bedienpaneele am Maschinengehäuse gehaltert oder in separat angeordnete Schaltschränke bzw. Bedienpulte derart eingebaut, dass deren Anzeige- und Bedienoberfläche einsehbar bzw. zugreifbar ist. Je nach Erfordernis ist dabei das rechteckige Display des Bedienpanels entweder im Hochformat oder im Querformat fix eingebaut. Außerdem kann die Bedien- bzw. Anzeigeebene lotrecht ausgerichtet sein, oder vor allem in Verbindung mit Bedienpulten eine Neigung von weniger als 90° gegenüber einer horizontalen Ebene aufweisen, insbesondere leicht geneigt ausgerichtet sein. Ein derartiges Industriebedienpanel ist beispielsweise aus der DE 20 2015 004 149 U1 bekannt.

Die Touchoberflächen von derartigen Industriebedienpanels sind oft hohen Kräften ausgesetzt, was zu einem Bruch der Abdeckscheibe bzw. zu einer sonstigen Beschädigung des Industriebedienpanels führen kann. Da innenliegende Bauteile des Industriebedienpanels oft eine hohe elektrische Spannung aufweisen, kann dadurch die Bedienperson einem erhöhten Sicherheitsrisiko ausgesetzt sein.

US 2016/048210 A1 offenbart, dass für ein Gerät mit Ausgabe eines haptischen Effekts überprüft wird, ob das Gerät einer parasitären Vibration ausgesetzt ist und dass gegebenenfalls der haptische Effekt entsprechend dieser ausgesetzten Vibration festgelegt wird. US 2016/139670 A1 offenbart, dass entsprechend einem gemessenen Status eines Benutzers eines Geräts ein auszugebender haptischer Effekt angepasst wird.

Aufgabe der vorliegenden Erfindung war es, die Nachteile des Standes der Technik zu überwinden und ein Verfahren zum Betreiben eines Industriebedienpanels zur Verfügung zu stellen, mittels welchem die Betriebssicherheit des Industriebedienpanels verbessert werden kann.

Diese Aufgabe wird durch ein Verfahren zum Betreiben eines Industriebedienpanels gemäß den Ansprüchen gelöst.

Erfindungsgemäß ist ein Verfahren zum Betreiben eines Industriebedienpanels für eine elektronische Steuerung zum Bedienen, Überwachen oder Programmieren von industriellen Anlagen oder Maschinen vorgesehen, wobei das Industriebedienpanel folgende Bauteile aufweist:
- ein Gehäuse;
- ein grafisches Display, welches eine Anzeigefläche zur Visualisierung von systemrelevanten Zuständen und/oder von Bedienoberflächen aufweist, wobei das grafische Display im Gehäuse aufgenommen ist;
- ein berührungssensitives Eingabemittel für eine Bedienperson, welches der Anzeigefläche des Displays überlagert ist;
- eine zumindest bereichsweise transparente Abdeckscheibe, welche eine Touchoberfläche des Industriebedienpanels bildet;
- zumindest ein Piezoelement welches derart auf die Abdeckscheibe wirkt, dass mittels dem Piezoelement die Touchoberfläche der Abdeckscheibe bewegbar ist;
- zumindest ein Kraftdetektionsmittel, insbesondere ein Dehnmessstreifen, welches mit der Abdeckscheibe gekoppelt ist.
Das Verfahren weist die folgenden Verfahrensschritte auf:
- Bewegen der Abdeckscheibe mittels dem zumindest einen Piezoelement;
- Erfassen der durch das Piezoelement bewirkten Bewegung der Abdeckscheibe mittels dem Kraftdetektionsmittel;
- Vergleichen der vom Kraftdetektionsmittel ermittelten Werte mit hinterlegten Sollwertbereichen;
- Einleiten von Sicherheitsmaßnahmen, wenn die vom Kraftdetektionsmittel ermittelten Werte außerhalb der hinterlegten Sollwertbereiche liegen.

Von Vorteil am erfindungsgemäßen Verfahren ist, dass durch das Vergleichen der vom Kraftdetektionsmittel ermittelten Werte mit hinterlegten Sollwertbereichen eine Beschädigung der Abdeckscheibe bzw. eine Beschädigung der Befestigung der Abdeckscheibe im Gehäuse erkannt werden kann. Somit ist es beispielswiese möglich, einen Riss in der Abdeckscheibe durch das beschriebene Verfahren zu ermitteln. Dies kann die Maschinensicherheit des Industriebedienpanels wesentlich verbessern. Aufgrund der hohen, im Inneren des Industriebedienpanels auftretenden, Spannungsspitzen könnte ein möglicher Spannungsüberschlag bzw. elektrisch leitender Kontakt mit den im Industriebedienpanel verbauten Bauteilen zu lebensgefährlichen Verletzungen führen.

Weiters kann es zweckmäßig sein, wenn die Sicherheitsmaßnahmen das Deaktivieren von Hochspannungsbauteilen im Industriebedienpanel umfassen. Von Vorteil ist hierbei, dass durch das Deaktivieren von Hochspannungsbauteilen die Gefahrenquellen beseitigt werden.

Ferner kann vorgesehen sein, dass die Sicherheitsmaßnahmen die Ausgabe eines akustischen und/oder optischen Warnsignals umfassen. Von Vorteil ist hierbei, dass die Bedienperson durch die Abgabe des akustischen oder optischen Warnsignals über die mögliche Gefahr informiert werden kann und somit entsprechende Schritte setzen kann.

Darüber hinaus kann vorgesehen sein, dass beim Vergleichen der vom Kraftdetektionsmittel ermittelten Werte mit im Industriebedienpanel hinterlegten Sollwertbereichen die von einer Bedienperson auf die Touchoberfläche der Abdeckscheibe ausgeübte Kraft berücksichtigt wird. Von Vorteil ist hierbei, dass durch diese Maßnahme die von der Bedienperson ausgeübte Kraft auf die Abdeckscheibe nicht zu einer Verfälschung der in den Kraftdetektionsmitteln ermittelten Werte führt. Die von der Bedienperson auf die Touchoberfläche ausgeübte Kraft wird somit in einem Kompensationswert berücksichtigt.

Vorteilhaft ist auch eine Ausprägung, gemäß welcher vorgesehen sein kann, dass die von einer Bedienperson auf die Touchoberfläche der Abdeckscheibe ausgeübte Kraft vor Beginn des Bewegens Abdeckscheibe mittels dem zumindest einen Kraftdetektionsmittel erfasst wird und zur Berücksichtigung beim Vergleichen der vom Kraftdetektionsmittel erfassten Werte mit den Sollwertbereichen als Kompensationswert herangezogen wird.

Gemäß einer Weiterbildung ist es möglich, dass beim Bewegen der Abdeckscheibe mittels mehreren Piezoelementen, durch Software oder mittels entsprechender Hardware sichergestellt wird, dass die einzelnen Piezoelemente synchron zueinander bewegt werden. Von Vorteil ist hierbei, dass durch diese Maßnahme die Abdeckscheibe nicht durch übermäßige Verformung beansprucht wird und somit die Lebensdauer der Abdeckscheibe erhöht wird. Somit kann diese Maßnahme zum Vorbeugen gegen eine Beschädigung der Abdeckscheibe dienen.

Femer kann es zweckmäßig sein, wenn beim Bewegen der Abdeckscheibe mittels dem zumindest einen Piezoelement, durch Software oder mittels entsprechender Hardware sichergestellt wird, dass das zumindest eine Piezoelement nicht in einer Resonanzfrequenz der Abdeckscheibe schwingt. Von Vorteil ist hierbei, dass durch diese Maßnahme die Abdeckscheibe nicht übermäßig beansprucht wird und somit die Lebensdauer der Abdeckscheibe erhöht wird. Somit kann diese Maßnahme zum Vorbeugen gegen eine Beschädigung der Abdeckscheibe dienen.

Darüber hinaus kann vorgesehen sein, dass das Bewegen der Abdeckscheibe mittels dem zumindest einen Piezoelement und Erfassen der durch das Piezoelement bewirkten Bewegung der Abdeckscheibe mittels dem Kraftdetektionsmittel in periodischen Zeitabständen erfolgt. Von Vorteil ist hierbei, dass durch diese Maßnahme in regelmäßigen Abständen überprüft werden kann, ob ein Gebrechen bzw. eine Beschädigung der Abdeckscheibe oder der Verklebung vorliegt.

Zusätzlich oder alternativ dazu kann vorgesehen sein, dass bei jeder programmmäßigen Vorgesehenen Aktivierung des Piezoelementes auch gleichzeitig die erfindungsgemäße Sicherheitsabfrage durchgeführt wird. Diese planmäßige Aktivierung des Piezoelementes kann beispielsweise bei Eingabe von Steuerbefehlen durch den Benutzer erfolgen.

Weiters kann vorgesehen sein, dass beim Erfassen der durch das Piezoelement bewirkten Bewegung der Abdeckscheibe mittels dem Kraftdetektionsmittel das zeitliche Schwingverhalten der Abdeckscheibe ermittelt wird.

Gemäß einer besonderen Ausprägung ist es möglich, dass beim Erfassen der durch das Piezoelement bewirkten Bewegung der Abdeckscheibe die erfassten Werte von mehreren Kraftdetektionsmittel in einer Modellrechnung miteinander kombiniert werden.

Die Abdeckscheibe kann als integraler Bestandteil des berührungssensitiven Eingabemittels ausgebildet sein. Alternativ dazu kann vorgesehen sein, dass die Abdeckscheibe als eigener Bauteil ausgebildet ist und das berührungssensitive Eingabemittel an der Unterseite der Abdeckscheibe angeordnet bzw. auf diese aufgeklebt ist.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels eines Industriebedienpanels;
- Fig. 2: eine Explosionsdarstellung des Industriebedienpanels;
- Fig. 3: eine Schnittdarstellung des Industriebedienpanels.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

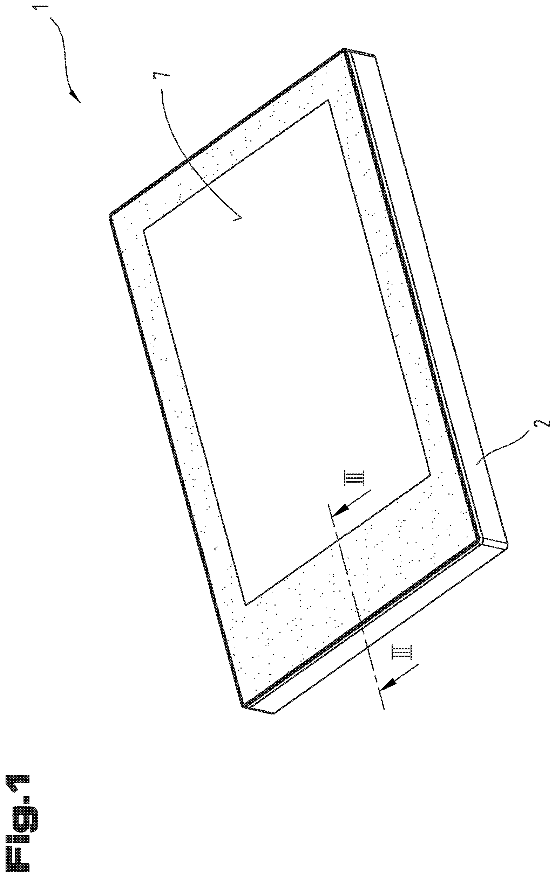

Fig. 1 zeigt eine schematische Darstellung eines Ausführungsbeispiels eines Industriebedienpanels 1, das zum Bedienen, Überwachen oder Programmieren von industriellen Anlagen oder Maschinen dient. Das Industriebedienpanel 1 ist an eine elektronische Steuerung gekoppelt, oder kann eine elektronische Steuerung aufweisen, die mit der zu bedienenden Anlage oder Maschine gekoppelt ist.

Das Industriebedienpanel 1 umfasst ein Gehäuse 2, welches zur Aufnahme der einzelnen Bauteile des Industriebedienpanels 1 ausgebildet ist. Insbesondere kann vorgesehen sein, dass das Gehäuse 2 für die Formgebung des Industriebedienpanels 1 und zum Schutz der im Industriebedienpanel 1 verbauten Bauteile dient. Das Gehäuse 2 kann grundsätzlich aus jedem Werkstoff gebildet sein, welcher eine Ausreichende Festigkeit aufweist, um dem Industriebedienpanel 1 eine ausreichende Formstabilität zu verleihen und die einzelnen Komponenten des Industriebedienpanels 1 vor Umgebungseinflüssen zu schützen. Insbesondere kann vorgesehen sein, dass das Gehäuse des Industriebedienpanels 1 aus einem metallischen Werkstoff, wie etwa Edelstahl oder Aluminium gebildet ist.

Das Gehäuse 2 kann einteilig ausgebildet sein, oder aus mehreren Bauteilen zusammengesetzt sein.

Das Industriebedienpanel 1 ist vorzugsweise relativ großformatig ausgebildet und demzufolge eher für eine stationäre Verwendung bzw. für einen stationären Einbau in Gehäuse oder Wandelemente von Maschinen, wie zum Beispiel kunststoffverarbeitenden Maschinen, vorgesehen.

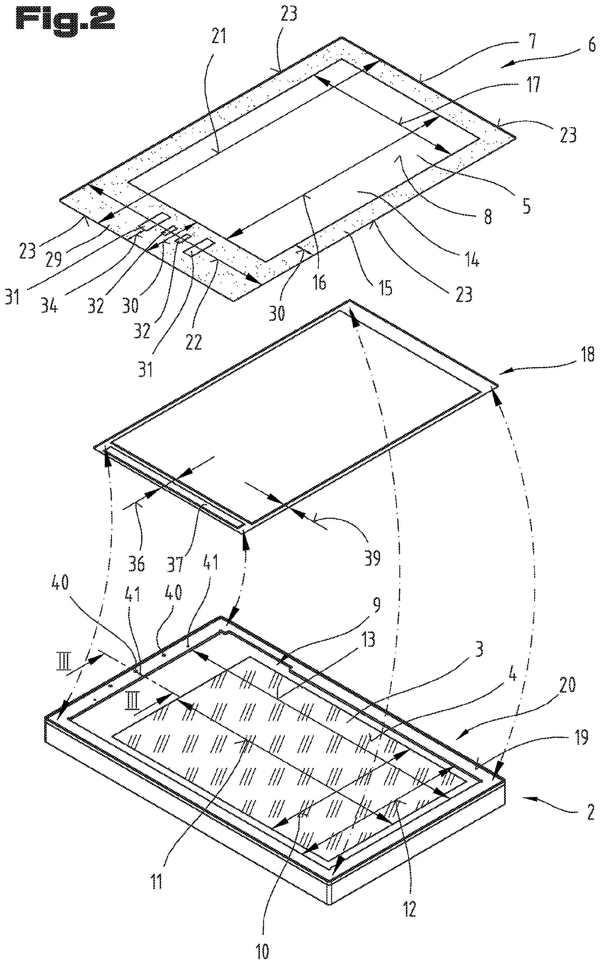

Fig. 2 zeigt das Ausführungsbeispiel des Industriebedienpanels 1 in einer Explosionsdarstellung, sodass die einzelnen Bauteile des Industriebedienpanels 1 sichtbar sind.

Wie aus Fig. 2 ersichtlich, umfasst das Industriebedienpanel 1 ein grafikfähiges Display 3 zur Darstellung von Zustandsinformationen der Anlage oder Maschine. Das grafikfähige Display 3 dient insbesondere zur Ausgabe von Statusinformationen über den Betriebs- oder Prozesszustand der steuerbaren technischen Einrichtung an einer Anzeigefläche 4. Neben einem grafikfähigen Display 3 können auch sonstige visuell erfassbare Ausgabemittel, wie z.B. Signalleuchten, Zeigerinstrumente und dgl. ausgebildet sein.

Insbesondere weist das grafische Display 3 für die Bedienperson sichtbar die Anzeigefläche 4 auf, welche zur Visualisierung von systemrelevanten Zuständen sowie von Bedienoberflächen vorgesehen ist. Das berührungssensitive Eingabemittel 5 ist der Anzeigefläche 4 des Displays 3 überlagert und zumindest abschnittsweise transparent oder durchscheinend ausgeführt. Das berührungssensitive Eingabemittel 5 ist somit zur Beeinflussung steuerungstechnischer Abläufe oder Anzeigeinhalte des Displays 3 durch eine Bedienperson vorgesehen. Bevorzugt arbeitet es nach dem kapazitiven Erfassungsprinzip. Alternativ sind aber auch andere, aus dem Stand der Technik bekannte Eingabe- bzw. Positionserfassungstechnologien möglich.

In einem ersten Ausführungsbeispiel ist es möglich, dass eine Abdeckscheibe 6 als eigner Bauteil ausgebildet ist und das berührungssensitive Eingabemittel 5 zwischen der Anzeigefläche 4 des Displays 3 und der Abdeckscheibe 6 angeordnet ist. Insbesondere kann hierbei vorgesehen sein, dass das berührungssensitive Eingabemittel 5 an der Unterseite 8 der Abdeckscheibe 6 befestigt ist.

Die Abdeckscheibe 6 ist somit der außenliegende Bauteil und weißt eine Touchoberfläche 7 auf die zur Eingabe von Befehlen mittels dem Finger der Bedienperson dient. Einen derartigen Aufbau findet man vor allem bei projiziert kapazitiven Touchscreens. Hierbei nutzt das berührungssensitive Eingabemittel 5 zwei Ebenen mit einem leitfähigen Muster, insbesondere Streifen oder Rauten. Die Ebenen sind voneinander isoliert angebracht. Eine Ebene dient als Sensor, die andere übernimmt die Aufgabe des Treibers. Der wesentliche Vorteil dieses Systems ist, dass das Eingabemittel 5 an einer zur Touchoberfläche 7 gegenüberliegenden Unterseite 8 der Abdeckscheibe 6 angeordnet sein kann und die Erkennung durch die Abdeckscheibe 6 hindurchprojiziert wird. Dadurch ist das Eingabemittel 5 und das Display 3 mittels der Abdeckscheibe 6 geschützt.

In einer weiteren Ausführungsvariante kann vorgesehen sein, dass das berührungssensitive Eingabemittel 5 gleichzeitig als Abdeckscheibe 6 dient, welche der Anzeigefläche 4 des grafischen Displays 3 vorgelagert ist und welche somit eine Touchoberfläche 7 definiert.

Wie insbesondere aus Fig. 2 ersichtlich, ist das Display 3 im Gehäuse 2 aufgenommen. Insbesondere ist vorgesehen, dass das Gehäuse eine Ausnehmung 9 aufweist, in der das Display 3 aufgenommen ist.

Vorzugsweise sind die Seitenlängen der Ausnehmung 9 größer bemessen, als die Seitenlängen der Anzeigefläche 4 des Displays 3. Die jeweiligen Seitenlängen sind dabei auf eine Ebene parallel zur Anzeigefläche 4 des Displays 3 bezogen.

Insbesondere kann vorgesehen sein, dass das Display 3 eine rechteckige Erstreckung aufweist. Das Display 3 weist somit eine Breite 10 und eine Länge 11 auf. Daran angepasst weist die Ausnehmung 9 im Gehäuse 2 ebenfalls eine Breite 12 und eine Länge 13 auf. Die Breite 10 des Displays ist vorzugsweise kleiner als die Breite 12 der Ausnehmung 9. Die Länge 11 des Displays 3 ist vorzugsweise kleiner als die Länge 13 der Ausnehmung 9.

Wie aus Fig. 2 weiters ersichtlich, weist die Abdeckscheibe 6 einen transparenten Teilbereich 14 und einen opaken Teilbereich 15 auf. Der transparente Teilbereich 14 ist vorzugsweise im Zentrum der Abdeckscheibe 6 angeordnet und wird vom opaken Teilbereich 15 umgeben. Insbesondere kann vorgesehen sein, dass eine Länge 16 des transparenten Teilbereiches 14 der Abdeckscheibe 6 in etwa gleich groß ist wie eine Länge 11 des Displays 3. Analog dazu kann vorgesehen sein, dass eine Breite 17 des transparenten Teilbereiches 14 der Abdeckscheibe 6 in etwa gleich groß ist wie eine Breite 10 des Displays 3.

Weiters kann vorgesehen sein, dass die Abdeckscheibe 6 mittels einem doppelseitigen Klebestreifen 18 am Gehäuse 2 befestigt ist. Insbesondere ist hierbei vorgesehen, dass das Gehäuse 2 eine Klebefläche 19 aufweist, an welcher der doppelseitige Klebestreifen 18 anhaftet. Insbesondere kann vorgesehen sein, dass die Klebefläche 19 in einer Ausnehmung 20 des Gehäuses 2 ausgebildet ist, wobei die Ausnehmung 20 zur Aufnahme der Abdeckscheibe 6 ausgebildet ist. Insbesondere kann hierbei vorgesehen sein, dass die Touchoberfläche 7 bündig mit dem Gehäuse 2 abschließt. Eine Länge 21 der Abdeckscheibe 6 bzw. eine Breite 22 der Abdeckscheibe 6 sind vorzugsweise kleiner als die Abmaße der Ausnehmung 20. Dadurch kann die Abdeckscheibe 6 einfach in die Ausnehmung 20 eingesetzt werden. Der doppelseitige Klebestreifen 18 ist im opaken Teilbereich 15 der Abdeckscheibe 6 angeordnet.

In der Explosionsdarstellung nach Fig. 2 ist die Abdeckscheibe 6 und der doppelseitige Klebestreifen 18 vom Gehäuse 2 beabstandet dargestellt, sodass die innenliegenden Bauteile bzw. das Display 3 im Gehäuse 2 sichtbar sind. Das Gehäuse 2 und das Display 3 sind hierbei in einer Ansicht von schräg oben dargestellt, sodass der Blickt auf die Anzeigefläche 4 des Displays 3 fällt. Die Abdeckscheibe 6 und der doppelseitige Klebestreifen 18 sind in der Darstellung nach Fig. 2 nach oben geschwenkt, sodass die Unterseite 8 der Abdeckscheibe 6 bzw. des doppelseitigen Klebestreifens 18 sichtbar sind.

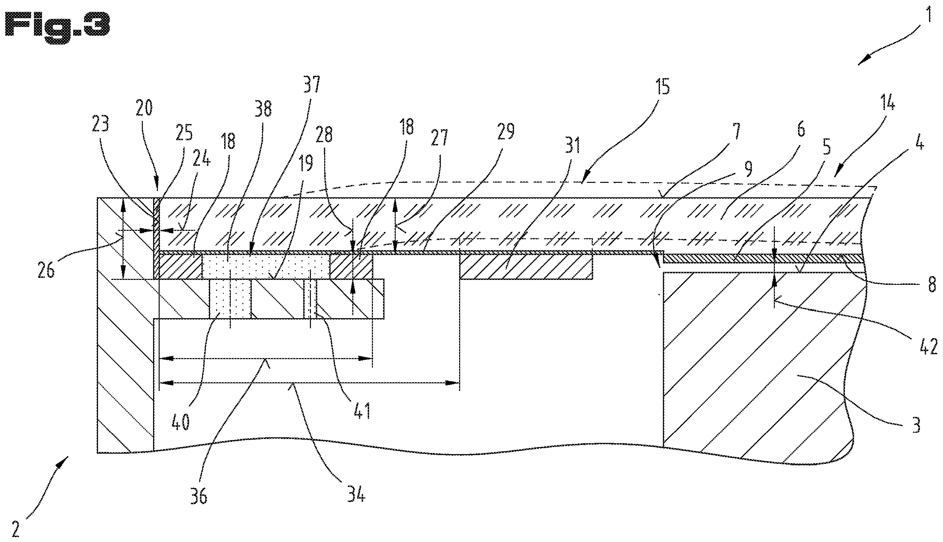

Fig. 3 zeigt in einer Detail ansicht eine Schnittdarstellung des Industriebedienpanels 1 gemäß der Schnittlinie III - III aus den Fig. 1 und 2.

Der Aufbau des Industriebedienpanels 1 wird in weiterer Folge anhand einer Zusammenschau der Fig. 2 und 3 beschrieben.

Dadurch, dass die Abdeckscheibe 6 kleinere Abmaße aufweist als die Außnehmung 20 im Gehäuse 2, ist im verbauten Zustand der Abdeckscheibe 6 eine Seitenfläche 23 in einem geringen Abstand zum Gehäuse 2 angeordnet, wodurch sich ein Spalt 24 zwischen dem Gehäuse 2 und der Seitenfläche 23 der Abdeckscheibe 6 ergibt. Dieser Spalt 24 ist vorzugsweise mit einer Abdichtmasse 25 ausgefüllt. Die Abdichtmasse 25 kann beispielsweise ein silikonähnlicher Stoff sein, welcher eine hohe Flexibilität aufweist und eine gute Dichtwirkung erzielt.

Eine Tiefe 26 der Ausnehmung 20 für die Abdeckscheibe 6 ist vorzugsweise in etwa gleich groß wie eine Dicke 27 der Abdeckscheibe 6 und eine Dicke 28 des doppelseitigen Klebestreifens 18 zusammen. Dadurch kann erreicht werden, dass die Touchoberfläche 7 der Abdeckscheibe 6 in etwa bündig mit dem Gehäuse 2 abschließt.

Weiters kann vorgesehen sein, dass der opake Teilbereich 15 durch eine opake Schicht 29 gebildet wird, welche an der Unterseite 8 der Abdeckscheibe 6 angeordnet ist. Die opake Schicht 29 kann hierbei direkt auf die Abdeckscheibe 6 aufgebracht sein. Insbesondere kann vorgesehen sein, dass die opake Schicht 29 mittels einem speziellen Druckverfahren auf die Abdeckscheibe 6 aufgebracht wird.

Wie besonders gut aus Fig. 3 ersichtlich, kann vorgesehen sein, dass sich der opake Teilbereich 15 ausgehend von einer der Seitenflächen 23 der Abdeckscheibe 6 bis zu jenem Bereich in dem das Display 3 angeordnet ist, erstreckt. Dies wird in weiterer Folge als Erstreckung 30 des opaken Teilbereichs 15 bezeichnet.

Wie aus Fig. 2 ersichtlich, kann vorgesehen sein, dass das Industriebedienpanel 1 Piezoelemente 31 umfasst, welche auf die Abdeckscheibe 6 wirken. Darüber hinaus können Kraftdetektionsmittel 32 vorgesehen sein, welche eine Verformung der Abdeckscheibe 6 erfassen. Hierbei kann vorgesehen sein, dass die Piezoelemente 31 bzw. die Kraftdetektionsmittel 32 in einem Randbereich der Abdeckscheibe 6 angeordnet sind. Dabei ist es denkbar, dass die Erstreckung 30 des opaken Teilbereichs 15 an jener Seitenfläche 23 der Abdeckscheibe 6 an der die Piezoelemente 31 bzw. die Kraftdetektionsmittel 32 angeordnet sind, größer ist als die Erstreckung 30 des opaken Teilbereiches 15 an den restlichen Seitenflächen 23 der Abdeckscheibe 6. Durch diese Maßnahme können die Piezoelemente 31 bzw. die Kraftdetektionsmittel 32 von der opaken Schicht 29 verdeckt sein und somit im zusammengebauten Zustand des Industriebedienpanels 1 vor den Blicken der Bedienperson versteckt sein.

Das Piezoelement 31 dient als Aktor zum Bewegen der Abdeckscheibe 6 und somit zum Erzeugen eines haptischen Feedbacks an der Touchoberfläche 7 der Abdeckscheibe 6. Hierbei kann vorgesehen sein, dass das Piezoelement 31 mittels einem Klebstoff an der Unterseite 8 der Abdeckscheibe 6 befestigt ist. Mit anderen Worten ausgedrückt, kann das Piezoelement 31 zwischen der Abdeckscheibe 6 und dem Gehäuse 2 angeordnet sein.

Das Piezoelement 31 kann durch Längenänderung, beispielsweise durch Kontraktion oder durch Expansion, ein Biegemoment in der Abdeckscheibe 6 einleiten. Insbesondere kann vorgesehen sein, dass das Piezoelement 31 seine Länge ändert, wenn es mit einer elektrischen Spannung beaufschlagt wird. Durch diese Längenänderung des Piezoelementes 31 kann eine Wölbung in der Abdeckscheibe 6 erzeugt werden. Insbesondere ist vorgesehen, dass die einzelnen Piezoelemente 31 in einem Abstand 34 zur Seitenfläche 23 angeordnet sind und in einem Abstand 35 zueinander angeordnet sind. Der Abstand 34 eines Piezoelementes 31 zur Seitenfläche 23 ist größer als eine Breite 36 des doppelseitigen Klebestreifens 18 an der zugehörigen Seitenfläche 23. Dadurch sind die Piezoelemente 31 zum doppelseitigen Klebestreifen 18 beabstandet. Durch diese Maßnahme kann bei Einwirkung des Piezoelementes 31 auf die Abdeckscheibe 6 eine Wölbung in der Abdeckscheibe erzeugt werden, wodurch ein haptisches Feedback gegeben werden kann.

Insbesondere kann vorgesehen sein, dass der Abstand 34 des Piezoelementes 31 zur Seitenfläche 23 zwischen 5 mm und 200 mm, insbesondere zwischen 35 mm und 70 mm beträgt.

Wie aus Fig. 2 weiters ersichtlich, kann vorgesehen sein, dass der doppelseitige Klebestreifen 18 an jener Seitenfläche 23 an welcher die Piezoelemente 31 angeordnet sind, eine Breite 36 aufweist die größer ist, als eine zweite Breite 39 des Klebestreifens 18 an den 90° dazu stehenden Seitenflächen 23.

Weiters kann vorgesehen sein, dass im doppelseitigen Klebestreifen 18 eine Aussparung 37 ausgebildet ist, welche zur Aufnahme einer Klebeschicht 38 dient. Die Aussparung 37 ist im Bereich der Piezoelemente 31 ausgebildet. Die zusätzliche Klebeschicht 38 dient dazu, dass sich bei Kraftaufbringung auf die Abdeckscheibe 6 mittels der Piezoelemente 31 die Abdeckscheibe 6 nicht vom Gehäuse 2 ablöst. Die Klebeschicht 38 ist vorzugsweise durch einen Klebstoff gebildet, welcher im flüssigen Zustand in das Industriebedienpanel 1 eingebracht wird und anschließend aushärtet. Insbesondere ist vorgesehen, dass die Klebeschicht 38 eine hohe Festigkeit aufweist. Weiters kann vorgesehen sein, dass die Klebeschicht 38 eine geringe Elastizität aufweist.

Zum Einbringen der Klebeschicht 38 in das Industriebedienpanel 1 kann vorgesehen sein, dass in der Klebefläche 19 eine Befüllöffnung 40 angeordnet ist, über welche die Klebeschicht 38 in die Aussparung 37 eingebracht werden kann. Dies kann beispielsweise mittels einer Injektionsspritze erfolgen. Weiters kann in der Klebefläche 19 eine Kontrollöffnung 41 ausgebildet sein, über welche das korrekte Einbringen der Klebeschicht 38 kontrolliert werden kann. Insbesondere kann vorgesehen sein, dass mehrere Befüllöffnungen 40 bzw. Kontrollöffnungen 41 vorgesehen sind. Weiters kann vorgesehen sein, dass die Aussparung 37 im doppelseitigen Klebestreifen 18 zusammen mit der Unterseite 8 der Abdeckscheibe 6 und der Klebefläche 19 einen abgeschlossenen Hohlraum zur Aufnahme der Klebeschicht 38 bildet.

Wie besonders gut aus Fig. 3 ersichtlich, kann vorgesehen sein, dass das Piezoelement 31 bzw. die Kraftdetektionsmittel 32 im opaken Teilbereich 15 der Abdeckscheibe 6 angeordnet sind. Das Kraftdetektionsmittel 32 kann in Form eines Dehnmessstreifens ausgebildet sein, welcher zur Erfassung der Verformung der Abdeckscheibe dient. Weiters kann vorgesehen sein, dass das Kraftdetektionsmittel 32 mittels einem Klebstoff an der Abdeckscheibe 6 befestigt ist.

Weiters ist es denkbar, dass die Kraftdetektionsmittel 32 und die Piezoelemente 31 nebeneinanderliegend an der Abdeckscheibe 6 angeordnet sind.

Anhand der Fig. 2 wird nun ein möglicher Verfahrensablauf zum Herstellen des Industriebedienpanels 1 beschrieben.

In einem ersten Verfahrensschritt können die einzelnen Bauteile des Industriebedienpanels 1 bereitgestellt werden. In einem weiteren Verfahrensschritt kann die Unterseite 8 der Abdeckscheibe 6 mit der opaken Schicht 29 versehen werden.

In einem weiteren Verfahrensschritt können die Piezoelemente 31 und die Kraftdetektionsmittel 32 mittels einem Klebstoff an der Unterseite 8 der Abdeckscheibe 6 befestigt werden. Außerdem kann das berührungssensitive Eingabemittel 5 an der Unterseite 8 der Abdeckscheibe 6 befestigt werden. Dies kann beispielsweise mittels einem optischen Klebstoff erfolgen. Insbesondere ist vorgesehen, dass das berührungssensitive Eingabemittel 5 an jenem Bereich der Unterseite 8 der Abdeckscheibe 6 befestigt wird, in welchem der transparente Teilbereich 14 ausgebildet ist.

Anschließend kann der doppelseitige Klebestreifen 18 an die Unterseite 8 der Abdeckscheibe 6 aufgeklebt werden. Der doppelseitige Klebestreifen 18 wird hierbei so an der Abdeckscheibe 6 platziert, dass die Aussparung 37 im Nahbereich zu den Piezoelementen 31 liegt. Natürlich ist es auch denkbar, dass zuerst der doppelseitige Klebestreifen 18 an der Unterseite 8 der Abdeckscheibe 6 aufgeklebt wird und anschließend die Piezoelemente 31 und die Kraftdetektionsmittel 32 an der Abdeckscheibe 6 befestigt werden.

Anschließend kann die Abdeckscheibe 6 mit den daran angeordneten Piezoelementen 31 und Kraftdetektionsmittel 32 in das Gehäuse 2 eingesetzt werden, wobei der doppelseitige Klebestreifen 18 die Abdeckscheibe 6 im Gehäuse 2, insbesondere an dessen Klebefläche 19 hält. Die Abdeckscheibe 6 wird hierbei derart in das Gehäuse 2 eingesetzt, dass zwischen der Abdeckscheibe 6 und dem Gehäuse 2 der Spalt 24 ausgebildet ist.

In einem anschließenden Verfahrensschritt kann die Abdichtmasse 25 in den zwischen der Abdeckscheibe 6 und dem Gehäuse 2 entstandenen Spalt 24 eingebracht werden.

In einem weiteren Verfahrensschritt kann über die Befüllöffnungen 40 die Klebeschicht 38 in die Aussparung 37 eingebracht werden und mittels der Kontrollöffnungen 41 das korrekte Einbringen der Klebeschicht 38 überprüft werden.

Die Klebeschicht 38 kann beispielsweise durch ein Epoxidharz gebildet sein.

Wie aus Fig. 3 ersichtlich, kann vorgesehen sein, dass im zusammengebauten Zustand des Industriebedienpanels 1 das berührungssensitive Eingabemittel 5 direkt an der Unterseite 8 der Abdeckscheibe 6 anliegt. Zur Vermeidung von Kollisionen während dem Bewegen der Abdeckscheibe 6 kann vorgesehen sein, dass das berührungssensitive Eingabemittel 5 in einem Abstand 42 zur Anzeigefläche 4 des Displays angeordnet ist.

In Fig. 3 ist strichliert auch der aktivierte Zustand des Piezoelementes 31 dargestellt, wobei die dabei entstehende Wölbung der Abdeckscheibe 6 ersichtlich ist.

Beim Betrieb des Industriebedienpanels 1 kann vorgesehen sein, dass mittels dem berührungssensitiven Eingabemittel 5 jene Position an der die Bedienperson ihren Finger auf die Touchoberfläche 7 der Abdeckscheibe 6 legt, erfasst wird. Mittels der Kraftdetektionsmittel 32 kann eine Einwirkstärke des Fingers der Bedienperson auf die Touchoberfläche 7 ermittelt werden. Hierzu wird von den Kraftdetektionsmitteln 32 die Verformung der Abdeckscheibe 6 erfasst und gleichzeitig die Position an der der Finger die Touchoberfläche 7 berührt mittels dem berührungssensitiven Eingabemittel 5 ermittelt. Durch Kenntnis der geometrischen Abmessungen der Abdeckscheibe 6 bzw. der Steifigkeit der Abdeckscheibe 6, der Position der einwirkenden Kraft und der an den Kraftdetektionsmitteln 32 ermittelten Kraftmesswerte kann somit auf die durch den Finger auf die Abdeckscheibe 6 aufgebrachten Einwirkkraft rückgerechnet werden.

Um der Bedienperson ein haptisches Feedback über die von ihr ausgelösten Steuerbefehle geben zu können, ist vorgesehen, dass die Abdeckscheibe 6 mittels dem Piezoelement 31 verformt wird. Dadurch, dass das Piezoelement 31 im Abstand 34 zur Seitenfläche 23 der Abdeckscheibe 6 angeordnet ist, wird die Abdeckscheibe 6 bei Aufbringen einer Kraft mittels dem Piezoelement 31 verformt, insbesondere gebogen.

Das Piezoelement 31 kann hierbei mit einer festgelegten Frequenz auf die Abdeckscheibe 6 einwirken.

Mittels der Kraftdetektionsmittel 32 kann neben der durch die Bedienperson aufgebrachten Einwirkkraft auch die mittels dem Piezoelement 31 in der Abdeckscheibe 6 eingeleitete Verformung erfasst werden. Insbesondere ist es denkbar, dass die Piezoelemente 31 unter Berücksichtigung der von den Kraftdetektionsmitteln 32 erfassten Werte angesteuert werden. Somit ist es beispielsweise möglich, dass in der Abdeckscheibe 6 auftretende Eigenschwingungen durch entsprechendes Ansteuern der Piezoelemente 31 kompensiert werden. Dadurch kann ein für die Bedienperson eindeutig identifizierbares haptisches Feedback an der Touchoberfläche 7 der Abdeckscheibe 6 erzeugt werden.

Weiters ist es auch denkbar, dass im Zuge der Herstellung des Industriebedienpanels, die Abdeckscheibe 6 mittels dem Piezoelement 31 in verschiedenen Frequenzen in Bewegung gesetzt wird, wobei die dabei auftretenden Kräfte von den Kraftdetektionsmitteln 32 erfasst und aufgezeichnet werden. Diese von den Kraftdetektionsmitteln 32 erfassten Werte können als sogenannte Sollwertbereiche in der Steuerung des Industriebedienpanels 1 hinterlegt werden, wodurch das Verhalten des Industriebedienpanels 1 bzw. der Abdeckscheibe 6 im Neuzustand hinterlegt wird.

Während des Betriebes des Industriebedienpanels 1 können die von den Kraftdetektionsmitteln 32 ermittelten Werte mit den hinterlegten Sollwertbereichen verglichen werden, wodurch auf eine Beschädigung der Abdeckscheibe 6 bzw. eine Beschädigung der Verklebung der Abdeckscheibe 6 oder eine Beschädigung des Gehäuses 2 rückgeschlossen werden kann.

Die Kontrolle einer Beschädigung eines Bauteils des Industriebedienpanels 1 kann beispielsweise in periodischen Abständen durchgeführt werden, wobei die Abdeckscheibe 6 mittels dem Piezoelement 31 bewegt wird, wenn die Bedienperson die Touchoberfläche 7 des Industriebedienpanels 1 nicht berührt. Alternativ dazu oder zusätzlich dazu kann auch vorgesehen sein, dass das Vergleichen der vom Kraftdetektionsmittel 32 ermittelten Werte mit den hinterlegten Sollwertbereichen während des Gebens eines haptischen Feedbacks erfolgt, wobei hierbei die von einem Finger der Bedienperson auf die Touchoberfläche 7 ausgeübte Einwirkkraft im Vergleich mit den Sollwertbereichen berücksichtigt wird.

Die beschriebenen Sicherheitsmaßnahmen können notwendig sein, da besonders die Piezoelemente 31 im Betrieb hohe Spannungen aufweisen, und somit der Bruch der Abdeckscheibe 6 bzw. eines sonstigen Bauteils des Industriebedienpanels 1 zu einer erhöhten Gefahr für die Bedienperson führen würde. Besonders in Verbindung mit Feuchtigkeit kann es bei defekten Bauteilen zu einem Spannungsüberschlag von den hochspannungsführenden Bauteilen des Industriebedienpanels 1 auf die Bedienperson kommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Industriebedienpanel | 30 | Erstreckung opaker Teilbereich |
| 2 | Gehäuse | 31 | Piezoelement |
| 3 | Display | 32 | Kraftdetektionsmittel |
| 4 | Anzeigefläche | 33 | |
| 5 | berührungssensitives Eingabemittel | 34 | Abstand Piezoelement-Seitenfläche |
| 6 | Abdeckscheibe | 35 | Abstand Piezoelemente zueinander |
| 7 | Touchoberfläche | 36 | Breite Klebestreifen |
| 8 | Unterseite | 37 | Aussparung |
| 9 | Ausnehmung Display | 38 | Klebeschicht |
| 10 | Breite Display | 39 | zweite Breite Klebestreifen |
| 11 | Länge Display | 40 | Befüllöffnung |
| 12 | Breite Ausnehmung | 41 | Kontrollöffnung |
| 13 | Länge Ausnehmung | 42 | Abstand |
| 14 | transparenter Teilbereich | | |
| 15 | opaker Teilbereich | | |
| 16 | Länge transparenter Teilbereich | | |
| 17 | Breite transparenter Teilbereich | | |
| 18 | doppelseitiger Klebestreifen | | |
| 19 | Klebefläche | | |
| 20 | Ausnehmung Abdeckscheibe | | |
| 21 | Länge Abdeckscheibe | | |
| 22 | Breite Abdeckscheibe | | |
| 23 | Seitenfläche | | |
| 24 | Spalt | | |
| 25 | Abdichtmasse | | |
| 26 | Tiefe Ausnehmung Abdeckscheibe | | |
| 27 | Dicke Abdeckscheibe | | |
| 28 | Dicke doppelseitiger Klebestreifen | | |
| 29 | opake Schicht | | |

## Patentansprüche

1. Verfahren zum Betreiben eines Industriebedienpanels (1) für eine elektronische Steuerung zum Bedienen, Überwachen oder Programmieren von industriellen Anlagen oder Maschinen, wobei das Industriebedienpanel (1) folgende Bauteile aufweist:
- ein Gehäuse (2);
- ein grafisches Display (3), welches eine Anzeigefläche (4) zur Visualisierung von systemrelevanten Zuständen und/oder von Bedienoberflächen aufweist, wobei das grafische Display (3) im Gehäuse (2) aufgenommen ist;
- ein berührungssensitives Eingabemittel (5) für eine Bedienperson, welches der Anzeigefläche (4) des Displays (3) überlagert ist;
- eine zumindest bereichsweise transparente Abdeckscheibe (6), welche eine Touchoberfläche (7) des Industriebedienpanels (1) bildet;
- zumindest ein Piezoelement (31) welches derart auf die Abdeckscheibe (6) wirkt, dass mittels dem Piezoelement (31) die Touchoberfläche (7) der Abdeckscheibe (6) bewegbar ist;
- zumindest ein Kraftdetektionsmittel (32), insbesondere ein Dehnmessstreifen, welches mit der Abdeckscheibe (6) gekoppelt ist,
**gekennzeichnet durch** die Verfahrensschritte:
- Bewegen der Abdeckscheibe (6) mittels dem zumindest einen Piezoelement (31);
- Erfassen der durch das Piezoelement (3 1) bewirkten Bewegung der Abdeckscheibe (6) mittels dem Kraftdetektionsmittel (32);
- Vergleichen der vom Kraftdetektionsmittel (32) ermittelten Werte mit hinterlegten Sollwertbereichen;
- Einleiten von Sicherheitsmaßnahmen, wenn die vom Kraftdetektionsmittel (32) ermittelten Werte außerhalb der hinterlegten Sollwertbereiche liegen.

2. Verfahren nach Anspruch 1, **dadurch gekennzeichnet, dass** die Sicherheitsmaßnahmen das Deaktivieren von Hochspannungsbauteilen im Industriebedienpanel (1) umfassen.

3. Verfahren nach Anspruch 1 oder 2, **dadurch gekennzeichnet, dass** die Sicherheitsmaßnahmen die Ausgabe eines akustischen und/oder optischen Warnsignals umfassen.

4. Verfahren nach einem der vorhergehenden Ansprüche, **dadurch gekennzeichnet, dass** beim Vergleichen der vom Kraftdetektionsmittel (32) ermittelten Werte mit im Industriebedienpanel (1) hinterlegten Sollwertbereichen die von einer Bedienperson ausgeübte Kraft auf die Touchoberfläche (7) der Abdeckscheibe (6) berücksichtigt wird.

5. Verfahren nach Anspruch 4, **dadurch gekennzeichnet, dass** die von einer Bedienperson auf die Touchoberfläche (7) der Abdeckscheibe (6) ausgeübte Kraft vor Beginn des Bewegens Abdeckscheibe (6) mittels dem zumindest einen Kraftdetektionsmittel (32) erfasst wird und zur Berücksichtigung beim Vergleichen der vom Kraftdetektionsmittel (32) erfassten Werte mit den Sollwertbereichen als Kompensationswert herangezogen wird.

6. Verfahren nach einem der vorhergehenden Ansprüche, **dadurch gekennzeichnet, dass** beim Bewegen der Abdeckscheibe (6) mittels mehreren Piezoelementen (31), durch Software oder mittels entsprechender Hardware sichergestellt wird, dass die einzelnen Piezoelemente (31) synchron zueinander bewegt werden.

7. Verfahren nach einem der vorhergehenden Ansprüche, **dadurch gekennzeichnet, dass** beim Bewegen der Abdeckscheibe (6) mittels dem zumindest einen Piezoelement (31), durch Software oder mittels entsprechender Hardware sichergestellt wird, dass das zumindest eine Piezoelement (31) nicht in einer Resonanzfrequenz der Abdeckscheibe (6) schwingt.

8. Verfahren nach einem der vorhergehenden Ansprüche, **dadurch gekennzeichnet, dass** das Bewegen der Abdeckscheibe (6) mittels dem zumindest einen Piezoelement (31) und Erfassen der durch das Piezoelement (31) bewirkten Bewegung der Abdeckscheibe (6) mittels dem Kraftdetektionsmittel (32) in periodischen Zeitabständen erfolgt.

9. Verfahren nach einem der vorhergehenden Ansprüche, **dadurch gekennzeichnet, dass** beim Erfassen der durch das Piezoelement (31) bewirkten Bewegung der Abdeckscheibe (6) mittels dem Kraftdetektionsmittel (32) das zeitliche Schwingverhalten der Abdeckscheibe (6) ermittelt wird.

10. Verfahren nach einem der vorhergehenden Ansprüche, **dadurch gekennzeichnet, dass** beim Erfassen der durch das Piezoelement (31) bewirkten Bewegung der Abdeckscheibe (6) die erfassten Werte von mehreren Kraftdetektionsmittel (32) in einer Modellrechnung miteinander kombiniert werden.

## Claims

1. A method for operating an industrial operating panel (1) for an electronic control for operating, monitoring or programming industrial installations or machines, wherein the industrial operating panel (1) has the following components:
- a housing (2);
- a graphic display (3), which has a display surface (4) for visualizing states relevant to the system and/or operating interfaces, wherein the graphic display (3) is accommodated in the housing (2);
- a touch-sensitive input means (5) for an operator, which is superimposed on the display surface (4) of the display (3);
- a cover plate (6) that is transparent at least in some regions, which forms a touch surface (7) of the industrial operating panel (1);
- at least one piezoelectric element (31), which acts on the cover plate (6) such that the touch surface (7) of the cover plate (6) is movable by means of the piezoelectric element (31);
- at least one force detection means (32), in particular a strain gauge, which is coupled with the cover plate (6),
**characterized by** the method steps:
- moving the cover plate (6) by means of the at least one piezoelectric element (31);
- detecting the movement of the cover plate (6) effected by the piezoelectric element (31) by means of the force detection means (32);
- comparing the values determined by the force detection means (32) with stored target value ranges;
- initiating safety measures if the values determined by the force detection means (32) are outside the stored target value ranges.

2. The method according to claim 1, **characterized in that** the safety measures comprise deactivating high-voltage components in the industrial operating panel (1).

3. The method according to claim 1 or 2, **characterized in that** the safety measures comprise issuing an acoustic and/or optical warning signal.

4. The method according to one of the preceding claims, **characterized in that** when comparing the values determined by the force detection means (32) to target value ranges stored in the industrial operating panel (1), the force exerted onto the touch surface (7) of the cover plate (6) by an operator is taken into consideration.

5. The method according to claim 4, **characterized in that** the force exerted onto the touch surface (7) of the cover plate (6) by an operator is detected by means of the at least one force detection means (32) before the start of the movement of the cover plate (6) and is used for consideration as a compensation value when comparing the values detected by the force detection means (32) to the target value ranges.

6. The method according to one of the preceding claims, **characterized in that** when moving the cover plate (6) by means of multiple piezoelectric elements (31), it is ensured by software or by means of appropriate hardware that the individual piezoelectric elements (31) are moved synchronously to each other.

7. The method according to one of the preceding claims, **characterized in that** when moving the cover plate (6) by means of the at least one piezoelectric elements (31), it is ensured by software or by means of appropriate hardware that the at least one piezoelectric element (31) does not vibrate in a resonance frequency of the cover plate (6).

8. The method according to one of the preceding claims, **characterized in that** the movement of the cover plate (6) is carried out by means of the at least one piezoelectric element (31), and the detection of the movement of the cover plate (6) effected by the piezoelectric element (31) is carried out by means of the force detection means (32) in periodic intervals.

9. The method according to one of the preceding claims, **characterized in that** when detecting the movement of the cover plate (6) effected by the piezoelectric element (31), the temporal vibration behavior of the cover plate (6) is determined by means of the force detection means (32).

10. The method according to one of the preceding claims, **characterized in that** when detecting the movement of the cover plate (6) effected by the piezoelectric element (31), the detected values of multiple force detection means (32) are combined in a model calculation.

## Revendications

1. Procédé de fonctionnement d'un panneau de commande industriel (1) pour une commande électronique pour la commande, la surveillance ou la programmation d'installations ou de machines industrielles, dans lequel le panneau de commande industriel (1) comprend les composants suivants :
- un boîtier (2) ;
- un écran graphique (3) qui comprend une surface d'affichage (4) pour la visualisation d'états importants pour le système et/ou d'interfaces utilisateurs, dans lequel l'affichage graphique (3) est logé dans le boîtier (2) ;
- un moyen d'entrée tactile (5) pour un opérateur, qui est superposé à la surface d'affichage (4) de l'écran (3) ;
- une vitre de recouvrement (6), transparente au moins à certains endroits, qui constitue d'une surface tactile (7) du panneau de commande industriel (1) ;
- au moins un élément piézoélectrique (31) qui agit sur la vitre de recouvrement (6) de façon à ce que la surface tactile (7) de la vitre de recouvrement (6) puisse être déplacée au moyen de l'élément piézoélectrique (31) ;
- au moins un moyen de détection de force (32), plus particulièrement une jauge de contrainte, qui est couplée avec la vitre de recouvrement (6),
**caractérisé par** les étapes suivantes :
- déplacement de la vitre de recouvrement (6) au moyen de l'au moins un élément piézoélectrique (31) ;
- détection du déplacement, provoqué par l'élément piézoélectrique (31), de la vitre de recouvrement (6) à l'aide du moyen de détection de force (32) ;
- comparaison des valeurs déterminées par le moyen de détection de force (32) avec des plages de valeurs de consigne enregistrées ;
- application de mesures de sécurité lorsque les valeurs déterminées par le moyen de détection de force (32) se trouvent hors des plages de valeurs de consigne enregistrées.

2. Procédé selon la revendication 1, **caractérisé en ce que** les mesures de sécurité comprennent la désactivation des composants à haute tension dans le panneau de commande industriel (1).

3. Procédé selon la revendication 1 ou 2, **caractérisé en ce que** les mesures de sécurité comprennent la production d'un signal d'avertissement sonore et/ou optique.

4. Procédé selon l'une des revendications précédentes, **caractérisé en ce que**, lors de la comparaison des valeurs déterminées par le moyen de détection de force (32) se trouvent hors des plages de valeurs de consigne enregistrées dans le panneau de commande industriel (1), la force exercée par un opérateur sur la surface tactile (7) de la vitre de recouvrement (6) est prise en compte.

5. Procédé selon la revendication 4, **caractérisé en ce que** la force exercée par un opérateur sur la surface tactile (7) de la vitre de recouvrement (6) avant le début du déplacement de la vitre de recouvrement (6) est mesurée au moyen de l'au moins un moyen de détection de force (32) et utilisée en tant que valeur de compensation prise en compte lors de la comparaison des valeurs mesurées par le moyen de détection de force (32) avec les plages de valeurs de consigne.

6. Procédé selon l'une des revendications précédentes, **caractérisé en ce que**, lors du déplacement de la vitre de recouvrement (6) au moyen de plusieurs éléments piézoélectriques (31), un logiciel ou un matériel correspondant garantit que les différents éléments piézoélectriques (31) sont déplacés de manière synchrone les uns par rapport aux autres.

7. Procédé selon l'une des revendications précédentes, **caractérisé en ce que**, lors du déplacement de la vitre de recouvrement (6) au moyen de l'au moins un élément piézoélectrique (31), un logiciel ou un matériel correspondant garantit que l'au moins un élément piézoélectrique (31) n'oscille pas avec une fréquence de résonance de la vitre de recouvrement (6).

8. Procédé selon l'une des revendications précédentes, **caractérisé en ce que** le déplacement de la vitre de recouvrement (6) a lieu au moyen de l'au moins un élément piézoélectrique (31) et la détection du déplacement de la vitre de recouvrement (6), provoqué par l'élément piézoélectrique (31), a lieu à intervalles réguliers à l'aide du moyen de détection de force (32).

9. Procédé selon l'une des revendications précédentes, **caractérisé en ce que**, lors de la mesure du déplacement de la vitre de recouvrement (6), provoqué par l'élément piézoélectrique (31) à l'aide du moyen de détection de force (32), le comportement oscillatoire de la vitre de recouvrement (6) est déterminé en fonction du temps.

10. Procédé selon l'une des revendications précédentes, **caractérisé en ce que**, lors de la mesure du déplacement de la vitre de recouvrement (6), provoqué par l'élément piézoélectrique (31), les valeurs mesurées par plusieurs moyens de détection de force (32) sont combinées entre elles dans un calcul de modélisation.
